# EUROPÄISCHE PATENTSCHRIFT

(11) **EP 1 426 906 B1**
(45) Veröffentlichungstag und Bekanntmachung des Hinweises auf die Patenterteilung: **29.03.2006**
(21) Anmeldenummer: 03026269.5
(22) Anmeldetag: 14.11.2003
(51) Int. Cl.: G08B 21/00, G08B 21/18, G05D 1/02, B60Q 1/52

(54) **Warnstrategie bei einer Fahrspurerkennung eines Kraftfahrzeugs**
Warning strategy during lane recognition by a vehicle
Stratégie d' alerte pendant l'identification de voie de circulation par un véhicule

(30) Priorität: 03.12.2002 DE 10256632
(43) Veröffentlichungstag der Anmeldung: 09.06.2004
(73) Patentinhaber: Volkswagen Aktiengesellschaft, 38436 Wolfsburg (DE)
(72) Erfinder: Lienkamp, Markus, Dr., 38108 Braunschweig (DE); Nuber, Heike, 91171 Greding (DE); Rosenow, Andrej, 85080 Gaimersheim (DE); Hofbauer, Manfred, 85092 Kösching (DE); Henze, Roman, 38106 Braunschweig (DE); Gödecke, Axel, 31234 Edemisssen (DE); Haney, Dirk, 38106 Braunschweig (DE)
(74) Vertreter: Meyer, Enno

(56) Entgegenhaltungen:
- EP-A- 1 086 854
- EP-A- 1 087 360
- US-A- 5 699 057
- US-A- 5 765 116
- US-A- 6 038 496
- US-B1- 6 172 600
- US-B1- 6 282 478

## Beschreibung

Die Erfindung betrifft ein Verfahren zur Warnung eines Fahrers eines mit einer Fahrspurerkennung ausgerüsteten Kraftfahrzeugs, mit anderen Worten eine Warnstrategie bei einer Fahrspurerkennung eines Kraftfahrzeugs, gemäß dem Oberbegriff des Anspruchs 1.

Verfahren und Vorrichtungen zur Fahrspurerkennung, bei denen die Fahrspur sowie die Position und der Fahrverlauf des Kraftfahrzeug relativ zur Fahrspur, auf der sich das Kraftfahrzeug befindet, anhand der Fahrspurmarkierungen bestimmt, werden zur Unterstützung des Fahrers in Fahrerassistenzsystemen eingesetzt. Der Zweck liegt dabei in der Vermeidung von Unfällen, wie sie beispielsweise durch eine Übermüdung, Ablenkung oder Unaufmerksamkeit des Fahrers bedingt werden können, wobei der Fahrer plötzlich die aktuelle Fahrspur verläßt.

Um die Fahrspur zu erkennen, werden unterschiedliche Sensiersysteme verwendet, die die vor dem Kraftfahrzeug befindliche Fahrspur abtasten, d.h. vermessen, und aus den gemessenen Rohdaten über einen geeigneten Algorithmus die Fahrbahnmarkierungen und die relative Lage des Kraftfahrzeugs zu den Markierungen bestimmen. Bei einem Abweichen der ausgewerteten Daten von vorgegebenen Solldaten, d.h. mit dem Vorliegen einer kritischen Verkehrssituation, erfolgt eine Warnung an den Fahrer.

So wird in der DE 196 26 292 A1 Infrarotlicht im Pulsbetrieb auf die Fahrbahn gestrahlt und aus der gemessenen Reflexion die Fahrbahnmarkierungen ermittelt.

Demgegenüber wird in der EP 0 837 378 ein Bildaufnahmevorrichtung, beispielsweise eine Film- oder Videokamera verwendet, die in vorgegebenen periodischen Abständen ein Bild der vor dem Fahrzeug liegenden Fahrbahn aufnimmt. Mittels Bildverarbeitungsalgorithmen werden aus den Daten die Fahrbahn bzw. die Fahrbahnmarkierungen extrahiert und damit die Fahrspur bestimmt.

Ferner ist aus der DE 101 51 015.2 eine Vorrichtung zur Aufmerksamkeitskontrolle eines Kraftfahrzeugführers bekannt, die mindestens einen Sensor zur Erfassung von Fahrbetriebsparametern und eine weitere Einrichtung zur Erfassung des Aufmerksamkeitszustand des Fahrzeugführers umfaßt, wobei letztere Einrichtung beispielsweise durch eine Fahrspurerkennungsvorrichtung gebildet sein kann. Stellt die Fahrspurerkennung eine unbeabsichtigte Abweichung von der Fahrspur fest, so wird ein Warnsignal an den Fahrer abgegeben.

Dokument US-A-6 038 496 beschreibt ein Fahrzeug mit einer optischen Abtasteinrichtung zur berührungslosen Abtastung eines seitlichen Fahrbahnbereichs und einer nachgeschalteten Auswerteeinheit. Mit dieser Abtasteinrichtung könne eine Einschlafwarnfunktion, eine automatische Spurhaltungsfunktion, eine Rückraumüberwachungsfunktion und eine Umgebungsüberwachungsfunktion bereitgesteilt werden. Ferner wird an den Fahrer ein Warnsignal, welches seitenspezifisch sein kann, abgegeben, wenn ein drohendes Verlassen des Fahrzeugs von der Fahrspur erkannt wird.

In der Praxis hat es sich jedoch gezeigt, daß bei den bekannten Systemen zur Fahrspurerkennung sehr viele Fehlwarnungen auftreten, die den Fahrer irritieren, so daß er letztendlich dem System kein Vertrauen mehr schenkt.

Ferner muß sichergestellt sein, daß durch die Warnung zwar die Aktivität des Fahrers wieder hergestellt wird und der Fahrer beim Verlassen der Fahrspur rechtzeitig gewarnt wird, jedoch muß gleichzeitig sichergestellt sein, daß der Fahrer nicht erschrickt, was zu unerwünschten . Fehlreaktionen des Fahrers führen kann.

Erfindung liegt daher die Aufgabe zugrunde, eine geeignete Warnstrategie bei einem gättungsgemäßen Verfahren zur Warnung eines Fahrers eines mit einer Fahrspurerkennung ausgerüsteten Kraftfahrzeugs zu schaffen, so daß eventuelle Fehlmeldungen den Fahrer nicht übermäßig irritieren.

Die Aufgabe wird durch ein Verfahren zur Warnung eines Fahrers eines mit einer Fahrspurerkennung ausgerüsteten Kraftfahrzeugs nach Anspruch 1 gelöst. Bevorzugte Ausgestaltungen der Erfindung sind Gegenstand der Unteransprüche.

Bei dem erfindungsgemäßen Verfahren zur Warnung eines Fahrers eines mit einer Fahrspurerkennung ausgerüsteten Kraftfahrzeugs wird eine Warnung an den Kraftfahrzeugfahrer ausgegeben wird, wenn die Fahrspurerkennung eine kritische Fahrsituationen detektiert, wobei der Zeitpunkt, die Dauer und/oder die Art des Warnsignals der Fahrspurerkennung eine Funktion der Verkehrssituation und/oder der Fahrzeugsituation und/oder der Fahrzeugumgebung sind.

Dabei wird die Warnung der Fahrspurerkennung aufgrund einer Annäherung oder Überschreitung der Fahrspurbegrenzung durch das Fahrzeugs sofort oder über eine Rampe abgeschaltet, wenn eine Fahrerreaktion in die Gegenrichtung festgestellt wird, und die Warnung der Fahrspurerkennung wird für die Gegenrichtung für eine vorbestimmte Zeit unterdrückt, wobei die vorbestimmte Zeit vorzugsweise kleiner oder gleich 5 Sekunden ist.

In einer weiteren bevorzugten Ausführungsform ist der Zeitpunkt der Warnung eine Funktion der Breite der Fahrspur, d.h. der Fahrzeugumgebung. Dabei kann die Warnung zwischen 0,5 Sekunden bis 1,5 Sekunden vor dem errechneten Überschreiten der Fahrspur erfolgen, wenn die Fahrspur zwischen 2,3 bis 4 m breit ist. Je breiter daher die Fahrspur ist, um so früher erfolgt die Warnung.

In einer weiteren bevorzugten Ausführungsform wird die Stärke der Warnung kontinuierlich mit der Annäherung an die Fahrspurbegrenzung gesteigert, wobei die Steigerung linear, progressiv oder degressiv erfolgen kann.

Vorzugsweise wird eine Warnung mittels einer Rampe über eine vorbestimmte Zeit gesteigert, falls aufgrund einer Warnunterdrückung die Warnung erst später erfolgt, wobei die vorbestimmte Zeit insbesondere zwischen 0,5 bis 1 Sekunde beträgt.

In einer weiteren bevorzugten Ausführungsform erfolgt auf Straßen mit Gegenverkehr die Warnung früher und/oder lauter als auf Straßen ohne Gegenverkehr. Ferner kann auf Fahrspuren ohne eine in die gleiche Fahrtrichtung vorhandene Nachbarspur die Warnung früher und/oder lauter erfolgt als auf Straßen mit mindestens einer Nachbarspur.

In einer weiteren bevorzugten Ausführungsform wird die Warnung der Fahrspurerkennung unterdrückt, wenn die Geschwindigkeit des Kraftfahrzeugs kleiner als ein vorgegebene Geschwindigkeit ist. Vorzugsweise beträgt die vorgegebene Geschwindigkeit 65 km/h.

In einer weiteren bevorzugten Ausführungsform wird die Warnung mit einer vorgegebenen Nachlaufzeit unterdrückt, wenn die Beschleunigung des Fahrzeugs oberhalb einer vorgegebenen Beschleunigungsschwelle ist. Dabei kann die Beschleunigung über die Motordrehzahl und/oder den Raddrehzahlsensoren des ABS bestimmt werden. Ferner kann die Warnung mit einer vorgegebenen Nachlaufzeit unterdrückt werden, wenn die Verzögerung des Fahrzeugs oberhalb einer vorgegebenen Verzögerungsschwelle ist. Dabei kann vorzugsweise die Betätigung der Bremse durch den Fahrer als ausreichende Verzögerung gewertet werden. Weiterhin kann die Warnung mit einer vorgegebenen Nachlaufzeit unterdrückt werden, wenn die Gaspedalstellung größer als eine vorgegebene Schwelle ist, wobei die vorgegebene Schwelle insbesondere bei 80% liegt. Dabei definiert 100% die Vollgasstellung und 0% die Leerlaufstellung des Gaspedals. Ferner kann die Warnung mit einer vorgegebenen Nachlaufzeit unterdrückt werden, wenn die Gaspedalgeschwindigkeit größer als eine vorgegebene Schwelle ist, die insbesondere 150% pro Sekunde betragen kann. Die vorgegebene Nachlaufzeit beträgt vorzugsweise zwischen 2 und 5 Sekunden. Ferner wird die durch die ausreichende Beschleunigungs- oder Verzögerungsschwellen bewirkte Warnunterdrückung aufgehoben, wenn die Beschleunigung oder Verzögerung von einem Fahrerassistenzsystem wie beispielsweise einem ACC oder GRA erfolgt.

Bevorzugte Ausführungsformen der Erfindung werden nachfolgend anhand der einzigen Zeichnung beschrieben.

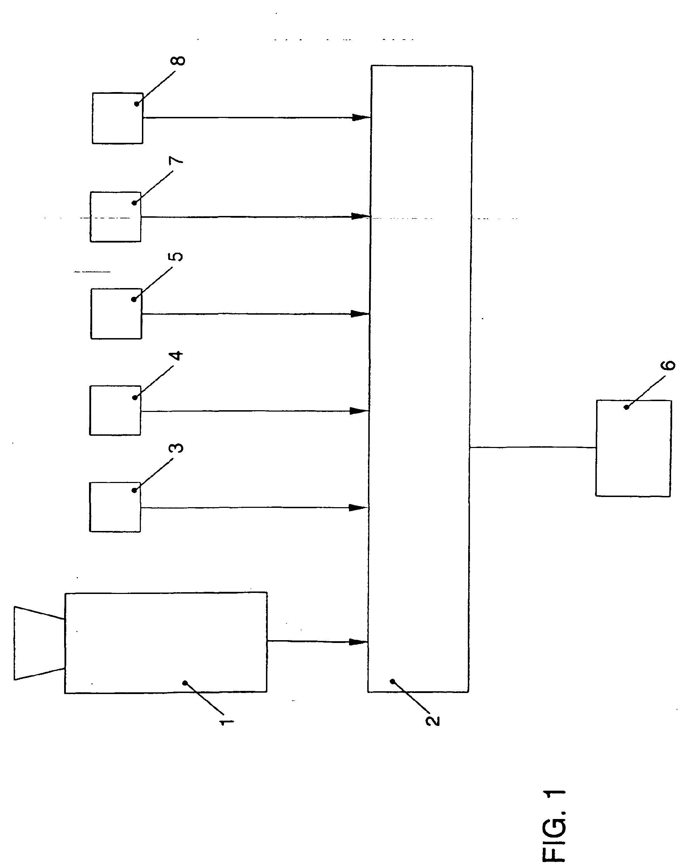

- Fig. 1: zeigt eine Vorrichtung zur Überwachung eines Kraftfahrzeugführers unter Verwendung einer Fahrspurerkennung in schematischer Darstellung.

Fig. 1 zeigt eine Vorrichtung zur Überwachung eines Kraftfahrzeugführers mit einer zur Straße ausgerichteten Kamera 1, die zur Erfassung von Fahrspurmarkierungen dient, einer Auswerteeinheit 2 zur Erkennung einer Fahrspurabweichung, sowie weiterer Sensorik wie einem Gierratensensor 3, einem Lenkwinkelsensor 4, einem Navigationssystem 5, einem Gaspedalsensor 7 und einem Bremslichtschalter 8. Weitere Eingabeeinheiten sind denkbar. Mittels der Signale des Gierratensensors 3, des Navigationssystems 5 und des Lenkwinkelsensors 4, die in die Auswerteeinheit 2 einfließen, kann die Erkennungsschärfe der Fahrspurerkennung verbessert werden. Ferner wird in der Auswerteeinheit 2 aus den eingegangenen Signalen die Lenkgeschwindigkeit als zeitliche Ableitung des Lenkwinkelsignals und die Aktivität des Fahrers bestimmt. So kann aus dem Gaspedalsensor 7 die Stellung des Gaspedals bzw. die Gaspedalgeschwindigkeit bestimmt werden und das Signal des Bremslichtschalters 8 zeigt der Auswerteeinheit 2 an, ob eine Bremsung eingeleitet wurde oder nicht. In Abhängigkeit von den Sensorsignalen wird ein Signalgeber 6 zur Erzeugung eines Warnsignals angesteuert.

In der Praxis hat sich gezeigt, daß bei den bekannten Systemen zur Fahrspurerkennung viele Fehlwarnungen auftreten, bzw. daß die Warnungen den Fahrer erschrecken können.

Im folgenden wird daher anhand von Beispielen erläutert, welche Parameter genutzt werden, um eine Warnung des Fahrers zu gestalten, bzw. wie die Mensch-Maschine-Schnittstelle realisiert wird, um den Fahrer eine gute Rückmeldung über den aktuellen Fahrzeugzustand zu geben.
Beim Verlassen der Fahrspur soll der Fahrer rechtzeitig gewarnt werden, wobei gleichzeitig sichergestellt sein muß, daß der Fahrer sich durch die Warnung nicht erschrickt. Ferner sollen Fehlwarnungen möglichst unauffällig und kurz sein. Folgende Warnstrategie wird vorgeschlagen:

Der Zeitpunkt des Warnbeginns erfolgt in Abhängigkeit von der Fahrspurbreite, d.h. beim Befahren sehr breiter Straßen, wie beispielsweise Autobahnen, erfolgt eine Warnung- beim drohenden Verlassen der Fahrspur recht früh. Der gleiche Zeitpunkt der Warnung würde auf engen Landstraße vom Fahrer schon als störend empfunden. Je nach Fahrspurbreite wird der Wambeginn von 1,5 sec vor Überschreiten der Fahrspurbegrenzung bei breiten Straßen (ca. 4 m breit) bis 0,5 sec bei engen Straßen (ca. 2,3 m breit) kontinuierlich reduziert.

Ferner wird die Stärke der Warnung in Abhängigkeit von der verbleibenden Zeit bis zum Überschreiten der Fahrspurbegrenzung geregelt. So wird die Stärke der Warnung, die beispielsweise durch ein entsprechendes Geräusch realisiert wird, kontinuierlich mit der Annäherung an die Fahrspurbegrenzung gesteigert. Dies erfolgt beispielsweise linear, progressiv oder degressiv.

Würde aufgrund einer bestehenden Warnunterdrückung die Warnung erst aktiv, wenn bereits stark gewarnt werden müßte, so wird die starke Warnung mit einer Rampe (linear, degressiv oder progressiv) über ca. 0,5 - 1 sec hochgefahren, um den Fahrer nicht zu erschrecken.

Auf engen Straßen ist es erforderlich, sofort mit einer stärkeren Warnung zu beginnen, um Fehlwarnungen zu minimieren.

Weiterhin erfolgt die Stärke oder/und der Zeitpunkt der Warnung in Abhängigkeit vom Gefährdungspotential. Auf Straßen mit Gegenverkehr setzt daher die Warnung früher und/oder lauter ein als auf einer Straße ohne Gegenverkehr. Ebenso erfolgt bei einer nicht vorhandene Nachbarspur in der gleichen Fahrtrichtung, beispielsweise einer Standspur, die Warnung früher oder lauter als bei vorhandener Nachbarspur.

Auch erfolgt die Stärke oder/und der Zeitpunkt des Warnbeginns in Abhängigkeit von der Aufmerksamkeit des Fahrers. Das heißt, daß ein unaufmerksamer Fahrer früher oder/und stärker beim Verlassen der Fahrspur gewarnt werden muß als ein aufmerksamer Fahrer. In Verbindung mit einer Vorrichtung zur Beurteilung der Aufmerksamkeit des Fahrers kann der Parameter "Warnbeginn" und/oder "Wamstärke" gesteuert werden.

Diese Vorrichtung zur Beurteilung der Aufmerksamkeit des Fahrers kann verkörpert sein durch ein Signal, das aussagt, daß der Fahrer mit der Bedienung des Navigationsgerät, Handys, Klimaanlage, Radio, etc. beschäftigt ist, eine direkte Beobachtung des Fahrerzustandes, wie beispielsweise Lidschlagcharakteristik, Puls, EEG, etc., und/oder eine Auswertung der Fahreraktivität, wie dies aus dem Lenkwinkelverhalten abgeleitet werden kann.

Beim Verlassen der Fahrspur soll der Fahrer rechtzeitig gewarnt werden. Gleichzeitig muß sichergestellt werden, daß der Fahrer sich durch die Warnung nicht erschrickt. Fehlwarnungen müssen möglichst unauffällig und kurz sein. Folgende Warnstrategien werden daher in einer bevorzugten Ausführungsform verwirklicht:

### Abschaltung der Warnung:

Die Warnung wird sofort oder über eine Rampe abgeschaltet, wenn eine Fahrerreaktion in die Gegenrichtung erkennbar ist, mit anderen Worten, wenn der Fahrer von der Linie weg lenkt, die er zu überschreiten droht oder bereits überschritten hat.

Ebenso wird die Warnung abgeschaltet, wenn eine andere Fahrerreaktion erkennbar ist

### Warnunterdrückung in Gegenrichtung:

Wurde beispielsweise vor der Überschreitung der Fahrspurbegrenzung in die eine Richtung gewarnt, so reagieren in den meisten Fällen die Fahrer recht deutlich in die Gegenrichtung. Um eine sofortige Warnung in die Gegenrichtung zu vermeiden, wird nach einer Warnung in die eine Richtung eine gewisse Zeit (ca. 5 sec) die Warnung in die andere Richtung unterdrückt.

### Beschleunigung/Verzögerung:

Es hat sich gezeigt, daß unaufmerksame Fahrer, beispielsweise durch Müdigkeit/Einschlafen oder Ablenkung, kaum beschleunigen oder verzögern. Ein Fahrer, der ausreichend stark beschleunigt oder verzögert, ist somit aufmerksam und muß nicht gewarnt werden.

Somit wird die Warnung der Fahrspurerkennung - mit einer gewissen Nachlaufzeit (2-5 sec) unterdrückt, wenn der Fahrer stark beschleunigt, was über die Drehzahländerung des Motors oder von den Raddrehzahlsensoren des ABS ermittelt werden kann, der Fahrer schnell das Gaspedal betätigt,-was beispielsweise bei elektrischen Fahrpedalmodulen aus der Änderung des Gaspedalwinkels bestimmt werden kann, oder der Fahrer das Bremspedal betätigt, was beispielsweise aus dem Signal des Bremslichtschalters abgeleitet werden kann. Bei einer Bergfahrt muß aber beispielsweise ein Kraftfahrzeug nicht zwingend beschleunigen, sondern es muß zum Erhalt einer konstanten Geschwindigkeit stärker Gas gegeben werden. Es wird somit die Warnung der Fahrspurerkennung ebenfalls mit einer gewissen Nachlaufzeit unterdrückt, wenn die Gaspedalstellung beispielsweise 80% der Vollgasstellung beträgt, wobei die Vollgasstellung mit 100% und die Leerlaufstellung mit 0% definiert sind. Ferner wird die Warnung mit einer gewissen Nachlaufzeit unterdrückt, wenn die Gaspedalgeschwindigkeit einen vorgegebene Wert, beispielsweise 150%/s. überschreitet. Es wird dann von einem aufmerksamen Fahrer ausgegangen.

Falls jedoch das Fahrzeug über Fahrerassistenzsysteme wie beispielsweise ACC (Automatic Cruise Control) und GRA (Geschwindigkeits-Regel-Anlage) verfügt und diese aktiv sind, muß unterschieden werden, ob die Systeme die Brems- bzw. Beschleunigungsvorgänge einleiten, oder ob die Aktion vom Fahrer kommt. Bei Brems- und Beschleunigungsvorgängen der Systeme ist nicht sicher, ob der Fahrer aufmerksam ist. Somit muß in diesem Fall die Warnunterdrückung aufgehoben werden.

Ferner zeigen Unfallzahlen, daß auf der Autobahn oder auf Landstraßen durch Abkommen von der Fahrbahn besonders viele Unfälle verursacht werden; in der Stadt hingegen nur wenige Unfälle dadurch. Zusätzlich kommt es besonders in der Stadt es häufiger zu Fehlwarnungen. Deswegen wird die Warnung der Fahrspurerkennung unterdrückt, wenn die Geschwindigkeit kleiner als die in der Stadt übliche Geschwindigkeit ist, beispielsweise ca. 65 km/h.

### BEZUGSZEICHENLISTE

- 1: Kamera
- 2: Auswerteeinheit
- 3: Gierratensensor
- 4: Lenkwinkelsensor
- 5: Navigationssystem
- 6: Signalgeber
- 7: Gaspedal
- 8: Bremslichtschalter

## Patentansprüche

1. Verfahren zur Warnung eines Führer eines mit einer Fahrspurerkennung ausgerüsteten Kraftfahrzeugs, wobei eine Warnung an den Kraftfahrzeugführer ausgegeben wird, wenn die Fahrspurerkennung eine kritische Fahrsituation detektiert, wobei der Zeitpunkt, die Dauer und/oder die Art des Warnsignals der Fahrspurerkennung eine Funktion der Verkehrssituation und/oder der Fahrzeugsituation und/oder der Fahrzeugumgebung ist,
**dadurch gekennzeichnet, dass**
die Warnung der Fahrspurerkennung aufgrund einer Annäherung oder Überschreitung der Fahrspurbegrenzung durch das Fahrzeugs sofort oder über eine Rampe abgeschaltet wird, wenn eine Fahrerreaktion in die Gegenrichtung festgestellt wird, wobei die Warnung für die Gegenrichtung für eine vorbestimmte Zeit unterdrückt wird.

2. Verfahren nach Anspruch 1, **dadurch gekennzeichnet, daß** die vorbestimmte Zeit kleiner oder gleich 5 Sekunden ist.

3. Verfahren nach Anspruch 1, **dadurch gekennzeichnet, daß** der Zeitpunkt der Warnung eine Funktion der Breite der Fahrspur ist.

4. Verfahren nach Anspruch 3, **dadurch gekennzeichnet, daß** die Warnung zwischen 0,5 Sekunden bis 1,5 Sekunden vor dem errechneten Überschreiten der Fahrspur erfolgt, wenn die Fahrspur zwischen 2,3 bis 4 m breit ist.

5. Verfahren nach einem der Ansprüche 3 oder 4, **dadurch gekennzeichnet, daß** die Stärke der Warnung kontinuierlich mit der Annäherung an die Fahrspurbegrenzung gesteigert wird.

6. Verfahren nach Anspruch 5, **dadurch gekennzeichnet, daß** die Steigerung linear, progressiv oder degressiv erfolgt.

7. Verfahren nach Anspruch 1, **dadurch gekennzeichnet, daß** die Warnung mittels einer Rampe über eine vorbestimmte Zeit gesteigert wird, falls aufgrund einer Warnunterdrückung die Warnung erst später erfolgt.

8. Verfahren nach Anspruch 7, **dadurch gekennzeichnet, daß** die vorbestimmte Zeit zwischen 0,5 bis 1 Sekunde beträgt.

9. Verfahren nach Anspruch 1, **dadurch gekennzeichnet, daß** auf Straßen mit Gegenverkehr die Warnung früher und/oder lauter erfolgt als auf Straßen ohne Gegenverkehr.

10. Verfahren nach Anspruch 1, **dadurch gekennzeichnet, daß** auf Fahrspuren ohne vorhandene Nachbarspur in Fahrtrichtung die Warnung früher und/oder lauter erfolgt als auf Straßen mit mindestens einer Nachbarspur.

11. Verfahren nach Anspruch 1, **dadurch gekennzeichnet, daß** die Warnung der Fahrspurerkennung unterdrückt wird, wenn die Geschwindigkeit des Kraftfahrzeugs kleiner als ein vorgegebene Geschwindigkeit ist.

12. Verfahren nach Anspruch 11, **dadurch gekennzeichnet, daß** die vorgegebene Geschwindigkeit 65 km/h beträgt.

13. Verfahren nach Anspruch 1, **dadurch gekennzeichnet, daß** die Warnung mit einer vorgegebenen Nachlaufzeit unterdrückt wird, wenn die Beschleunigung des Fahrzeugs oberhalb einer vorgegebenen Beschleunigungsschwelle ist.

14. Verfahren nach Anspruch 13, **dadurch gekennzeichnet, daß** die Beschleunigung über die Motordrehzahl, den Raddrehzahlsensoren des ABS und/oder aus der Änderung des Gaspedalwinkels bestimmt wird.

15. Verfahren nach Anspruch 1, **dadurch gekennzeichnet, daß** die Warnung mit einer vorgegebenen Nachlaufzeit unterdrückt wird, wenn die Verzögerung des Fahrzeugs oberhalb einer vorgegebenen Verzögerungsschwelle ist.

16. Verfahren nach Anspruch 15, **dadurch gekennzeichnet, daß** die Betätigung der Bremse durch den Fahrer als ausreichende Verzögerung gewertet wird.

17. Verfahren nach einem der Ansprüche 13 bis 16, **dadurch gekennzeichnet, daß** die Warnunterdrückung aufgehoben wird, wenn die Beschleunigung oder Verzögerung von einem Fahrerassistenzsystem erfolgt.

18. Verfahren nach Anspruch 1, **dadurch gekennzeichnet, daß** die Warnung mit einer vorgegebenen Nachlaufzeit unterdrückt wird, wenn die Gaspedalstellung größer als eine vorgegebene Schwelle ist.

19. Verfahren nach Anspruch 18, **dadurch gekennzeichnet, daß** die vorgegebene Schwelle bei 80% liegt.

20. Verfahren nach Anspruch 1, **dadurch gekennzeichnet, daß** die Warnung mit einer vorgegebenen Nachlaufzeit unterdrückt wird, wenn die Gaspedalgeschwindigkeit größer als eine vorgegebene Schwelle ist.

21. Verfahren nach Anspruch 20, **dadurch gekennzeichnet, daß** die vorgegebene Schwelle 150% pro Sekunde beträgt.

22. Verfahren nach einem der Ansprüche 13 bis 21, **dadurch gekennzeichnet, daß** die vorgegebene Nachlaufzeit zwischen 2 und 5 Sekunden beträgt.

## Claims

1. Method for warning a driver of a motor vehicle which is equipped with a lane recognition system, a warning being output to the driver of the motor vehicle if the lane recognition system detects a critical driving situation, the time, the duration and/or the type of warning signal of the lane recognition system being a function of the situation of the traffic and/or the situation of the vehicle and/or the surroundings of the vehicle, **characterized in that** the warning by the lane recognition system due to the lane boundary being approached or transgressed by the vehicle is switched off immediately or by means of a ramp if a driver reaction in the opposite direction is detected, with the warning for the opposite direction being supressed for a predetermined time.

2. Method according to Claim 1, **characterized in that** the predetermined time is less than or equal to 5 seconds.

3. Method according to Claim 1, **characterized in that** the time of the warning is a function of the width of the lane.

4. Method according to Claim 3, **characterized in that** the warning takes place 0.5 to 1.5 seconds before the calculated transgression of the lane if the lane is between 2.3 to 4 m wide.

5. Method according to one of Claims 3 or 4,
**characterized in that** the severity of the warning is increased continuously as the lane boundary is approached.

6. Method according to Claim 5, **characterized in that** the increase takes place linearly, progressively or degressively.

7. Method according to Claim 1, **characterized in that** the warning is increased over a predetermined time by means of a ramp if the warning does not take place until later owing to a warning being suppressed.

8. Method according to Claim 7, **characterized in that** the predetermined time is between 0.5 to 1 second.

9. Method according to Claim 1, **characterized in that** on roads with oncoming traffic the warning is issued earlier and/or louder than on roads without oncoming traffic.

10. Method according to Claim 1, **characterized in that** on lanes without an adjacent lane in the direction of travel the warning is issued earlier and/or louder than on roads with at least one adjacent lane.

11. Method according to Claim 1, **characterized in that** the warning of the detection of a lane is suppressed if the velocity of the motor vehicle is lower than a predetermined velocity.

12. Method according to Claim 11, **characterized in that** the predetermined velocity is 65 km/h.

13. Method according to Claim 1, **characterized in that** the warning is suppressed with a predefined run-on time if the acceleration of the vehicle is above a predefined acceleration threshold.

14. Method according to Claim 13, **characterized in that** the acceleration is determined by means of the engine speed, the wheel speed sensors of the ABS and/or from the change in the angle of the accelerator pedal.

15. Method according to Claim 1, **characterized in that** the warning is suppressed with a predefined run-on time if the deceleration of the vehicle is above a predefined deceleration threshold.

16. Method according to Claim 15, **characterized in that** the activation of the brake by the driver is evaluated as sufficient deceleration.

17. Method according to one of Claims 13 to 16, **characterized in that** the suppression of the warning is cancelled if the acceleration or deceleration is carried out by a driver assistance system.

18. Method according to Claim 1, **characterized in that** the warning is suppressed with a predefined run-on time if the setting of the accelerator pedal is greater than a predefined threshold.

19. Method according to Claim 18, **characterized in that** the predefined threshold is 80%.

20. Method according to Claim 1, **characterized in that** the warning is suppressed with a predefined run-on time if the velocity of the accelerator pedal is higher than a predefined threshold.

21. Method according to Claim 20, **characterized in that** the predefined threshold is 150% per second.

22. Method according to one of Claims 13 to 21, **characterized in that** the predefined run-on time is between 2 and 5 seconds.

## Revendications

1. Procédé d'alerte d'un conducteur d'un véhicule automobile équipé d'un dispositif d'identification de voie de circulation, dans lequel une alerte est délivrée au conducteur de véhicule automobile lorsque le dispositif d'identification de voie de circulation détecte une situation de conduite critique, l'instant, la durée et/ou le type du signal d'alerte du dispositif d'identification de voie de circulation étant fonction de la situation de trafic et/ou de la situation du véhicule et/ou de l'environnement du véhicule,
**caractérisé en ce que**
l'alerte du dispositif d'identification de voie de circulation en raison d'une approche ou d'un franchissement de la limite de voie de circulation par le véhicule est coupée immédiatement ou en passant par une rampe lorsqu'une réaction du conducteur dans la direction opposée est constatée, l'alerte pour la direction opposée étant supprimée pendant une durée prédéterminée.

2. Procédé selon la revendication 1, **caractérisé en ce que** la durée prédéterminée est inférieure ou égale à 5 secondes.

3. Procédé selon la revendication 1, **caractérisé en ce que** l'instant de l'alerte est fonction de la largeur de la voie de circulation.

4. Procédé selon la revendication 3, **caractérisé en ce que** l'alerte a lieu entre 0,5 seconde et 1,5 seconde avant le franchissement calculé de la voie de circulation lorsque la voie de circulation présente une largeur entre 2,3 et 4 m.

5. Procédé selon la revendication 3 ou 4, **caractérisé en ce que** l'intensité de l'alerte est augmentée en continu en s'approchant de la limite de voie de circulation.

6. Procédé selon la revendication 5, **caractérisé en ce que** l'augmentation s'effectue de façon linéaire, progressive ou dégressive.

7. Procédé selon la revendication 1, **caractérisé en ce que** l'alerte est intensifiée au moyen d'une rampe pendant un temps prédéterminé si l'alerte a lieu seulement plus tard en raison d'une suppression d'alerte.

8. Procédé selon la revendication 7, **caractérisé en ce que** le temps prédéterminé se situe entre 0,5 et 1 seconde.

9. Procédé selon la revendication 1, **caractérisé en ce que** sur des routes avec une circulation en sens inverse, l'alerte a lieu plus tôt et/ou de façon plus accentuée que sur des routes sans circulation en sens inverse.

10. Procédé selon la revendication 1, **caractérisé en ce que** sur des voies de circulation sans présence de voie adjacente dans le sens de la marche, l'alerte a lieu plus tôt et/ou de façon plus accentuée que sur des routes avec au moins une voie adjacente.

11. Procédé selon la revendication 1, **caractérisé en ce que** l'alerte du dispositif d'identification de voie de circulation est supprimée lorsque la vitesse du véhicule automobile est inférieure à une vitesse prédéfinie.

12. Procédé selon la revendication 11, **caractérisé en ce que** la vitesse prédéfinie est de 65 km/h.

13. Procédé selon la revendication 1, **caractérisé en ce que** l'alerte est supprimée avec un délai de poursuite prédéfini lorsque l'accélération du véhicule se situe au-dessus d'un seuil d'accélération prédéfini.

14. Procédé selon la revendication 13, **caractérisé en ce que** l'accélération est déterminée par l'intermédiaire du régime moteur, des capteurs de vitesse de roue de l'ABS et/ou d'après la variation de l'angle d'accélérateur.

15. Procédé selon la revendication 1, **caractérisé en ce que** l'alerte est supprimée avec un délai de poursuite prédéfini lorsque la décélération du véhicule se situe au-dessus d'un seuil de décélération prédéfini.

16. Procédé selon la revendication 15, **caractérisé en ce que** l'actionnement du frein par le conducteur est évalué comme une décélération suffisance.

17. Procédé selon l'une quelconque des revendications 13 à 16, **caractérisé en ce que** la suppression d'alerte est annulée lorsque l'accélération ou la décélération est effectuée par un système d'aide à la conduite.

18. Procédé selon la revendication 1, **caractérisé en ce que** l'alerte est supprimée avec un délai de poursuite prédéfini lorsque la position d'accélérateur est supérieure à un seuil prédéfini.

19. Procédé selon la revendication 18, **caractérisé en ce que** le seuil prédéfini se situe à 80%.

20. Procédé selon la revendication 1, **caractérisé en ce que** l'alerte est supprimée avec un délai de poursuite prédéfini lorsque la vitesse d'accélérateur est supérieure à un seuil prédéfini.

21. Procédé selon la revendication 20, **caractérisé en ce que** le seuil prédéfini est de 150% par seconde.

22. Procédé selon l'une quelconque des revendications 13 à 21, **caractérisé en ce que** le délai de poursuite prédéfini se situe entre 2 et 5 secondes.
